# EUROPEAN PATENT SPECIFICATION

(11) **EP 2 466 912 B1**
(45) Date of publication and mention of the grant of the patent: **26.06.2013**
(21) Application number: 12159695.1
(22) Date of filing: 21.09.2009
(51) Int. Cl.: H04R 1/10, H05K 5/06, A61F 11/06, H04M 1/60, H04R 25/00, H04R 5/033

(54) **Listening device with a rechargeable energy source adapted for being charged through an ITE-unit, use and method of manufacturing thereof**
Hörvorrichtung mit einer durch eine In-dem-Ohr-Einheit wiederaufladbaren Energiequelle, deren Verwendung und Herstellungsverfahren
Dispositif d'écoute avec source d'énergie rechargeable adaptée au chargement par une unité ITE, son utilisation et procédé de fabrication

(43) Date of publication of application: 20.06.2012
(62) Divisional of application: 09170863.6
(73) Proprietor: Oticon A/S, 2765 Smørum (DK)
(72) Inventor: Hastrup, Simon, DK-2765 Smørum (DK)
(74) Representative: Nielsen, Hans Jørgen Vind

(56) References cited:
- EP-A2- 1 921 893
- EP-A2- 2 034 768
- EP-A2- 2 063 669
- WO-A2-2008/010716
- US-A- 3 354 271
- US-A1- 2002 029 900
- US-A1- 2004 264 720
- US-A1- 2005 170 866
- US-B1- 6 959 097

## Description

### TECHNICAL FIELD

The present invention relates to portable electronic listening devices comprising an electrically rechargeable energy source. The invention relates specifically to a listening device comprising a rechargeable energy source, the listening device comprising an ITE part adapted for being located in an ear canal of a user and a BTE part adapted for being located behind an ear of the user.

The invention may be useful in a listening device using a rechargeable energy source, e.g. a rechargeable battery.

### BACKGROUND ART

Rechargeable energy sources (e.g. batteries) find increasing use in listening devices. Wired (cf. e.g. WO 2007/101439 A2) or wireless (cf. e.g. EP 1 727 395 A2) recharging of rechargeable batteries are alternatively used by charging stations. The present application deals with recharging based on a galvanic connection between charging station and rechargeable energy source.

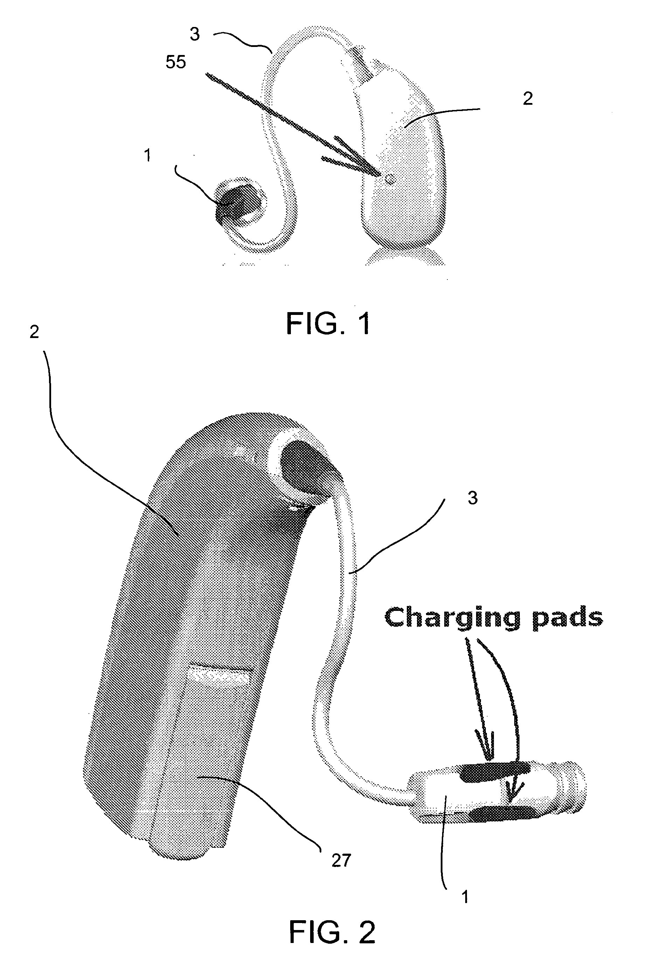

Charging pads are e.g. placed on the main body of a listening device, cf. behind the ear (BTE) hearing aid example of FIG. 1, where a receiver (speaker) of the listening device is located in the ear canal (RITE) and the two parts are mechanically and electrically connected by a connecting tubular element.

WO 2008/010716 A2 deals with a hearing aid comprising a device housing which is intended and adapted to be worn outside an ear of a user and which co-acts with an in-the-ear part which is provided with a sound-emitting opening and which is intended and adapted to be received at least substantially in the ear of the user. The in-the-ear part is physically separated from the device housing, wherein at least a microphone and a loudspeaker are accommodated together with the sound-emitting opening in the in-the-ear part.

US3354271 deals with a self-contained hearing aid comprising an in the ear part and an external power source (e.g. worn behind the ear) which is connectable to the in the ear part and adapted to charge the hearing aid while it is in use.

US 2002/029900 A1 deals with a method of providing a synthetic resin capping layer on a printed circuit, the capping layer exhibiting a variation of the mechanical properties in a direction at right angles to the capping layer. The capping layer is manufactured by injecting moulding of a foam-forming injection-moulding material.

The invention deals with various ways of placing the charging pads or contact terminals in or on a portable listening device.

### DISCLOSURE OF THE INVENTION

The idea is to move the charging pads away from the main body (e.g. a BTE part adapted to be located at or behind an ear of a user) of the listening device (e.g. a hearing aid) to the "accessories" (e.g. an ITE part adapted for being located in an ear canal of a user, or a connecting element for connecting a BTE part with an ITE part) and thereby preferably reuse existing connections. This gives - in an embodiment - the opportunity to have a completely sealed listening device (main body, e.g. BTE part).

The charging pads can have wires of their own in an ITE part comprising a receiver or they can be connected to existing wires, for example the receiver wires (e.g. using appropriate switch elements). If the receiver wires are also used for charging, then a filtration of the signals can be placed either in a BTE-part of the listening device or in an ITE part comprising the receiver.

This invention can be applied to all types of ITE parts, irrespective whether the ITE part only consists of a receiver or it also comprises other components, e.g. a microphone and/or a rechargeable energy source (battery).

An embodiment of the concept comprises the charging of the battery through the same connector used to connect the ITE part to the parts of the listening device located in a main body of the listening device, e.g. in a BTE part (the connector in a normal operational mode of the listening device connecting components of the ITE part (e.g. a receiver, a microphone, etc.) to components located in the BTE part, e.g. an output driver, a signal processing unit, etc.).

An object of the present invention is to provide an alternative scheme for charging a rechargeable energy source of a listening device.

Objects of the invention are achieved by the invention described in the accompanying claims and as described in the following.

### A glistening device:

An object of the invention is achieved by a listening device as defined in claim 1.

In a particular embodiment, the listening device is adapted to provide that electrical contact between the electric charge terminals of the listening device and the charging terminals of the charging station is established via a cable with an electrical connector matching an electrical connector of the BTE part.

In a particular embodiment, the rechargeable energy source comprises a rechargeable battery.

In a particular embodiment, the rechargeable battery is located in the ITE part or in the connecting element.

In a particular embodiment, the ITE part comprises a receiver.

The ITE part comprises a housing for enclosing the functional components of the ITE part, e.g. a receiver and/or a microphone and appropriate electrical connections. In a particular embodiment, the electric charge terminals are located on the housing of the ITE part.

In a particular embodiment, the BTE part comprises a hermetically closed outer housing.

In a particular embodiment, the ITE part comprises a microphone. In an embodiment the microphone is located in the ITE part to ensure that it faces away from the ear drum (and towards the outer environment) when the ITE part is mounted in an ear canal of the user.

In a particular embodiment, the BTE part comprises a signal processing unit. Typically, the signal processing unit is or can be adapted to provide a frequency dependent gain according to a user's needs. In an embodiment, the BTE part comprises a driver (e.g. including a DA- or DD-converter) for driving the receiver.

In a particular embodiment, the ITE part or the connecting element comprises circuitry for managing the charging of the rechargeable energy source.

In a particular embodiment, the connecting element comprises seven or less electrical conductors for establishing electrical connections between the BTE part and the ITE part, e.g. less than 6 or less than 5 or less than 4 connections. In an embodiment, the BTE part and/or the ITE part comprises circuitry adapted to allow a use of one or more of the electrical conductors for several purposes depending on the mode of operation, e.g. 1) to connect a charging station to the rechargeable energy source during a charging mode and 2) to connect a receiver or microphone of the ITE part to the BTE part (e.g. to a signal processing unit located in the BTE part) during a normal mode of operation of the listening device.

In a particular embodiment, the electrical connector of the connecting element, which is used for charging the rechargeable energy source in a charging station, is adapted to be used for electrically connecting the ITE part to the BTE part during normal operation of the listening device. In an embodiment, the connecting element comprises electrical conductors, which in a normal mode of operation of the listening device, are adapted for appropriately connecting functional elements of the ITE part (e.g. a battery, a receiver, a microphone, etc.) with functional elements of the BTE part (e.g. a signal processing unit, an AD-, a DA-conversion unit, a microphone, a battery, etc.).

In a particular embodiment, the listening device comprises a hearing instrument, a headset, a headphone, an active ear protection device or a combination thereof.

### Use:

In an aspect use of a listening device as described above, in the detailed description of 'mode(s) for carrying out the invention' and in the claims is furthermore provided.

### A method:

A method of charging a rechargeable energy source of a listening device comprising an ITE part adapted for being located in an ear canal of a user and a BTE part adapted for being located behind an ear of the user, the ITE and BTE parts being at least mechanically connected by a connecting element, the listening device comprising a rechargeable energy source and electric charge terminals for allowing the charging of the rechargeable energy source when electrically connected to charging terminals of a charging station is furthermore provided as example. The method comprises charging the energy source via the electric charging terminals located in or on the ITE part, the connecting element or in an electrical connector of the connecting element connectable to the BTE part.

In an example, the method comprises a charging mode, wherein the rechargeable energy source is recharged.

It is intended that the structural features of the device described above, in the detailed description of 'mode(s) for carrying out the invention' and in the claims can be combined with the method, when appropriately substituted by a corresponding process. Embodiments of the method have the same advantages as the corresponding device.

In an embodiment, the connecting element is adapted to be a renewable (e.g. disposable) part that is regularly exchanged with a corresponding (e.g. new) part. In an embodiment, the ITE part is adapted to be a renewable (e.g. disposable) part that is regularly exchanged with a corresponding (e.g. new) part. In a particular embodiment, the connecting element and the ITE part are adapted to be a combined, renewable (e.g. disposable) part that is regularly exchanged with a corresponding (e.g. new) part. In a particular embodiment, where the rechargeable energy source (e.g. a battery) is located in the ITE part or in the connecting element, the combined, renewable part is exchanged with a corresponding part when the renewable energy source is to be recharged. In an embodiment, the combined, renewable part comprises a receiver and a microphone of the listening device. In an embodiment, the renewable part is exchanged with a corresponding part (which is ready for use), wherein the renewable energy source is partially of fully charged.

### A listening system:

A listening system is moreover provided as example. The listening system comprises at least an ITE part and a connecting element of a listening device as described above, in the detailed description of 'mode(s) for carrying out the invention' and in the claims and a charging station, wherein the connecting element comprises a connector adapted to electrically connect the ITE part to the BTE part during normal operation of the listening device and where the charging station is adapted to use the connector for electrically charging the energy source of the listening device.

In a particular example, the charging station comprises circuitry for managing the charging of the rechargeable energy source.

Further objects of the invention are achieved by the embodiments defined in the dependent claims and in the detailed description of the invention.

As used herein, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements maybe present, unless expressly stated otherwise. Furthermore, "connected" or "coupled" as used herein may include wirelessly connected or coupled. As used herein, the term "and/or" includes any and all combinations of one or more of the associated listed items. The steps of any method disclosed herein do not have to be performed in the exact order disclosed, unless expressly stated otherwise.

### BRIEF DESCRIPTION OF DRAWINGS

FIG. 1 shows a receiver in the ear-type hearing instrument comprising charging terminals located on a BTE-part of the instrument,
FIG. 2 shows a receiver in the ear-type hearing instrument comprising charging terminals located on an ITE-part of the instrument,
FIG. 3 shows an embodiment of a listening device (FIG. 3a) and an example of a listening system (FIG. 3b), and
FIG. 4 shows an example of a listening system (FIG. 4a) and an embodiment of a listening device (FIG. 4b).

The figures are schematic and simplified for clarity, and they just show details which are essential to the understanding of the invention, while other details are left out. Throughout, the same reference numerals are used for identical or corresponding parts.

### MODE(S) FOR CARRYING OUT THE INVENTION

FIG. 1 shows an example of a receiver in the ear-type hearing instrument comprising charging terminals located on a BTE-part of the instrument. The hearing instrument comprises a BTE-part 2, an ITE part 1 and a connecting element 3. The housing of the BTE part comprises charging contacts 55 on each side of the housing for recharging the rechargeable battery in a charging station by making a galvanic contact to corresponding terminals of the charging station. The BTE part comprises battery, microphone unit, signal processing unit and possible other functional units of a hearing instrument. The ITE part 1 comprises (in this example a receiver located in an ear-canal-locating flexible element to ensure an appropriate position of the receiver when mounted in the ear canal of a user. The semi-flexible connecting element 3 comprises electrical conductors for connecting the receiver to the circuitry of the BTE part (e.g. the signal processing unit). The length and rigidity of the connecting element is adapted to allow a certain adaptation of its form to the anatomy of the user, so that the ITE and BTE parts can be appropriately located in the ear canal and at the ear of the user, respectively, and so that its form is maintained during normal handling of the hearing instrument (e.g. to allow mounting and taking off of the instrument).

FIG. 2 shows an example of a receiver in the ear-type hearing instrument comprising charging terminals (*Charging pads* in FIG. 2) located on an ITE-part 1 of the instrument. The ITE part 1 comprises a receiver for presenting a processed signal to a user, when the ITE part is located in an ear canal of the user. The rechargeable energy source, here a rechargeable battery, is placed in the BTE part 2 of the hearing instrument, cf. battery drawer 27. In this example, the charging current during recharge in a charging station is picked up by the *Charging pads* of the ITE-part and fed through appropriate electrical conductors in the connecting element 3 to the rechargeable battery in the BTE part 2. In addition to the battery, the BTE-part 2 of the hearing instrument comprises a microphone system (e.g. a directional microphone system) for picking up sounds from the environment and converting them to corresponding electrical input signals and a signal processing unit for enhancing the electrical input signals, typically including to apply a frequency dependent gain to the signal in accordance with a user's needs. The BTE part may further comprise other functionality of a state of the art hearing instrument (e.g. a telecoil and/or other wired or wireless receiver and corresponding circuitry).

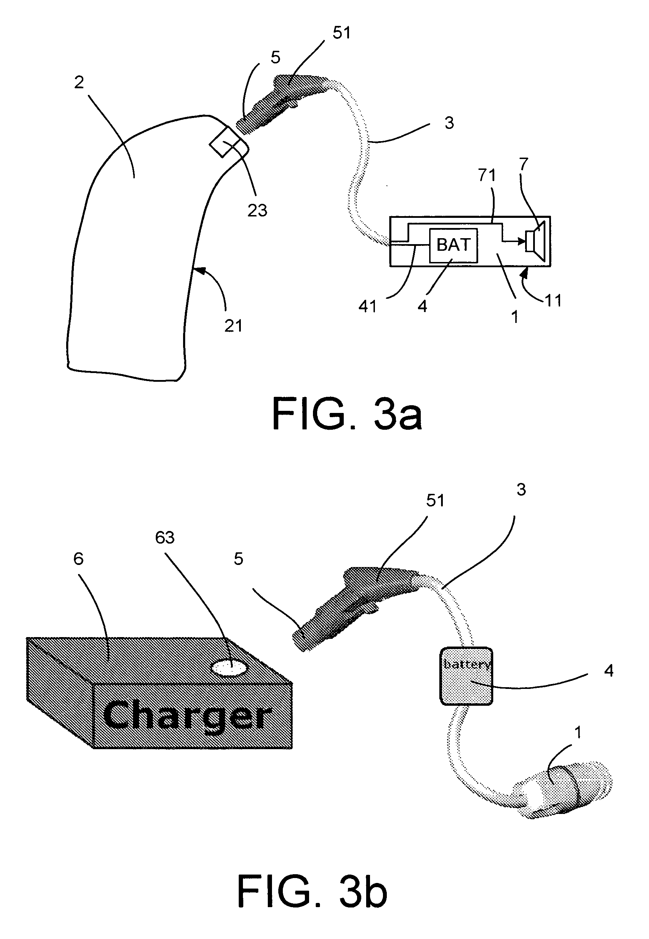

FIG. 3 shows an embodiment of a listening device (FIG. 3a) and an example of a listening system (FIG. 3b). In this example the listening system, e.g. a hearing instrument, in which the battery is placed, is adapted to be charged through a connector 5, 51 of the connecting element 3. In the listening device of FIG. 3a, the ITE part 1 comprises a rechargeable battery *(BAT* in FIG. 3a) and a receiver 7 enclosed in ITE housing 11. The BTE part comprises other functionality of the hearing instrument, including signal processing and microphone units. The housing 21 of the BTE part comprises connector 23 adapted to receive and electrically connect connector 5 of the connecting element. The connector 5 of the connecting element 3 comprises an electrically insulating element 51 adapted for facilitating placement or removal of the connecting element in/from the corresponding sockets 23, 63 of the BTE part 2 and the charging station 6, respectively. The BTE part 2, the socket 23, the plug 5, the connecting element 3 and the ITE part 1 comprise electrical conductors (cf. 41, 71 in the ITE part, each possibly comprising a number of separate electrical conductors to establish the connection) for
1) electrically connecting the battery (*BAT*) and the receiver 7 to the relevant functional units of the BTE part 2, when the connector (plug) 5 of the connecting element 3 is placed in the appropriate connector (socket) 23 of the BTE part, in a *normal operating mode* (FIG. 3a), and for
2) electrically connecting the battery (*BAT*) to a charging source in a charging station 6, when the connector (plug) 5 of the connecting element 3 is placed in the appropriate connector (socket) 63 of a charging station 6, in *a charging mode* (FIG. 3b).

FIG. 3b illustrates a charging mode of a hearing aid system comprising charger 6 and a connecting element 3 and ITE part 1 of a listening device. In the embodiment of FIG. 3b, the rechargeable battery 4 is located in the connecting element 3 (instead of in the ITE part 1 as in FIG. 3a), but the function and external form and number of conductors/pins of the connector 5, 51 may be identical to those of the embodiment of FIG. 3a.

The charger-cable (connecting element 3) is connected to the ITE part and thereby reusing the connecting element to recharge the battery.

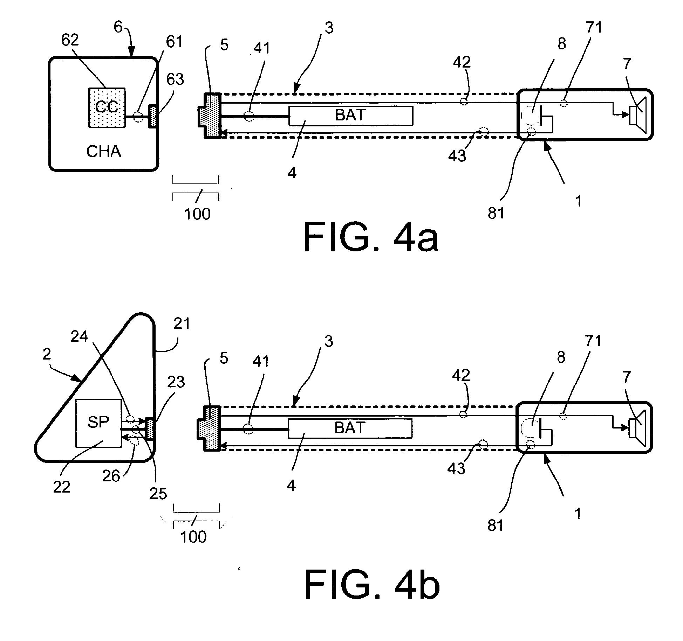

FIG. 4 shows an example of a listening system (FIG. 4a) and an embodiment of a listening device (FIG. 4b). In this example the ITE part 1 comprises receiver 7 as well as microphone 8, whereas the rechargeable battery 4 (*BAT*) is integrated with the connecting element 3. It may alternatively form part of the ITE part (as suggested in the embodiment of FIG. 3a).

FIG. 4a shows an example of a listening system comprising a charger 6, a connecting element 3 and an ITE part 1 of a listening device. The arrow 100 illustrates the possible connection and disconnection of connectors 63 and 5 of the charging station 6 and the connecting element 3, respectively. The charging station 6 (*CHA* in FIG. 4a) comprises charging source and circuitry 62 (CC in FIG. 4a), which may be specifically adapted for charging a particular type of rechargeable energy source. When the connectors 63 and 5 of the charging station 6 and the connecting element 3 are joined (electrically connected), a charging process may be initiated in the charging station that recharges the battery via electrical connections 61 and 41 through connectors 63, 5. The electrical connections 61, 41 may comprise more than one electrical conductor, typically 2 electrical conductors each. Typically, no electrical connection to the electrical components of the connecting element 3 and the ITE part 1 (here microphone 8 and receiver 7) other than to the battery (*BAT*) is established during charging of the rechargeable battery (in the charging mode of the listening system).

FIG. 4b shows an embodiment of a listening device comprising a BTE part 2, a connecting element 3 and an ITE part 1. The arrow 100 illustrates the possible connection and disconnection of connectors 23 and 5 of the BTE part and connecting element 3, respectively. When the connectors 23 and 5 of the BTE part 2 and the connecting element 3 are joined (electrically connected), electrical connections between the signal processing unit 22 (SP) of the BTE part 2 and the battery 4 (*BAT*), the receiver 7 and the microphone 8 of the connecting element 3 and the ITE part 1 are established through connectors 23, 5. The battery 4 provides energy to the electrical units of the hearing instrument, here the BTE part (including the signal processing unit 22) and the ITE part (including the microphone 8). The electrical connections 25, 41 between battery and BTE part may comprise more than one electrical conductor, typically 2 electrical conductors each. Similarly, the electrical connections 24, 42, 71 between the BTE part and the receiver of the ITE part may comprise more than one electrical conductor, typically 2 electrical conductors each. Similarly, the electrical connections 81, 43, 26 between the microphone of the ITE part and the BTE part may comprise more than one electrical conductor, typically 3 electrical conductors each.

In an embodiment, the BTE part, the connecting element and/or the ITE part comprises electronic elements adapted for - in a charging mode - allowing the use of at least one, e.g. two or more, of the electrical conductors of the connecting element (and possibly corresponding contact element(s) of the electrical connector of the connecting element), which - in a normal mode of operation of the listening device - is used for connecting functional elements of the ITE and BTE parts, respectively, for the charging of the rechargeable battery.

In a preferred embodiment, the BTE part 2 comprises a hermetically closed housing 21 to protect the electronic circuitry of the BTE part from the aggressive environment of a human ear canal (salty, humid). This is feasible, because the microphone and receiver are located outside the BTE part (the BTE part comprising only signal processing (SP) and possible other functionality (e.g. wireless communication circuitry), which does not require openings in the housing). This has the further advantage that the customized parts of the hearing instrument is concentrated to the BTE part, whereas the rest (here connecting element 3 and ITE part 1) comprises standard components that may be exchanged during the lifetime of the hearing instrument, either regularly or when needed (e.g. when the rechargeable energy source has degraded to an unacceptable level, e.g. due to too many recharging cycles).

A hermetically closed BTE part enclosing a number of electronic parts (e.g. mounted on a substrate. e.g. a flexible printed circuit board) can be made in a number of different ways. In an embodiment, the housing of the BTE part is moulded around the components, e.g. directly around (so that the mould may be allowed to touch the enclosed components) or around an intermediate shell or skeleton (e.g. protecting selected components) used as a carrier for the mould. In an embodiment, two or more shell parts are glued or welded together. In an example, two or more shell parts are joined together by micro-snap elements that irreversibly and hermetically joins the parts (e.g. by inserting an intermediate sealing element, e.g. a gasket, between the shell parts). In an example, the hermetically closed BTE part is adapted to be able to withstand commonly occurring pressure differences (e.g. up to 2 or 3 atm. difference). Alternatively or additionally, the housing of the BTE part is provided with a pressure equalization valve adapted for allow a pressure equalization, if the pressure difference between the interior and exterior of the housing exceeds a predefined threshold level, e.g. 1 atm, or exceeds a predefined factor, e.g. a facto of 2 or 3.

The connecting element 3 and the ITE part 1 shown in FIG. 4a are adapted to be used with the BTE part 2 of FIG. 4b thereby constituting the listening device of FIG. 4b.

An elongate, rechargeable battery may in general be implemented in a number of ways. One possible solution providing a wire- or cable-like battery is discussed in WO 2006/077192 A1. A rechargeable battery for use in a listening device may e.g. be of the NiMH-type or of the Li-lon-type.

The connection between the BTE and ITE parts of the embodiments of FIG. 2-4 can e.g. be made by standard n-pin connectors, e.g. of the plug and socket type, e.g. standard 3, 4 and 5 pin connectors CS43, CS44 and CS45 (plugs and sockets according to IEC-118-12 are e.g. available from Sonion/Pulse Engineering Inc., e.g. Roskilde, Denmark).

The invention is defined by the features of the independent claim(s). Preferred embodiments are defined in the dependent claims. Any reference numerals in the claims are intended to be non-limiting for their scope.

Some preferred embodiments have been shown in the foregoing, but it should be stressed that the invention is not limited to these, but may be embodied in other ways within the subject-matter defined in the following claims.

### REFERENCES

WO 2006/077192 A1 (OTICON) 27-07-2006

WO 2007/101439 A2 (GN RESOUND) 13-09-2007

EP 1 727 395 A2 (AUDIA AKUSTIK) 29-11-2006

## Claims

1. A listening device comprising an ITE part (1) adapted for being located in an ear canal of a user and a BTE part (2) adapted for being located behind an ear of the user, the ITE and BTE parts being at least mechanically connected by a connecting element (3), the connecting element (3) comprising electrical conductors for establishing electrical connections between the BTE part (2) and the ITE part (1), the listening device comprising a rechargeable energy source (4) and electric charge terminals for allowing the charging of the rechargeable energy source when electrically connected to charging terminals of a charging station (6),
wherein the ITE part (1) comprises microphone (8) and a receiver (7), the BTE part (2) comprises a signal processing unit (22) and possible other functionality, which does not require openings in the housing, **CHARACTERIZED IN THAT** the BTE part (2) comprises a hermetically closed outer housing (21), and wherein the electric charging terminals of the listening device are located in or on the ITE part or the connecting element, and wherein the BTE part (2) and/or the ITE part (1) comprises circuitry adapted to allow a use of one or more of the electrical conductors for several purposes depending on the mode of operation.

2. A listening device according to claim 1 wherein the rechargeable energy source comprises a rechargeable battery.

3. A listening device according to claim 2 wherein the rechargeable battery (4) is located in the ITE part (1) or in the connecting element (3).

4. A listening device according to claim 3 adapted to provide that electrical contact between the electric charge terminals of the listening device and charging terminals of the charging station (6) is established via a cable with an electrical connector (5) matching an electrical connector (23) of the BTE part (2).

5. A listening device according to claim 2 wherein the rechargeable battery (4) is located in the BTE part (2).

6. A listening device according to any one of claims 1-4 wherein electric charge terminals are located on the housing of the ITE part (1).

7. A listening device according to any one of claims 1-6 wherein the connecting element (3) comprises seven or less electrical conductors (42, 43) for establishing electrical connections between the BTE part (2) and the ITE part (1).

8. A listening device according to any one of claims 1-7 comprising a hearing instrument, a headset, a headphone, an active ear protection device or a combination thereof.

9. A listening device according to any one of claims 1-8 wherein the ITE part (1) and/or the connecting element (3) is/are adapted to be disposable parts that is/are regularly exchanged with corresponding new parts.

10. A listening device according to any one of claims 1-9 wherein the ITE part (1) or the connecting element (3) comprises circuitry for managing the charging of the rechargeable energy source.

11. Use of a listening device according to any one of claims 1-10.

12. A method of manufacturing a listening device according to any one of claims 1-10, the method comprising
providing a hermetically closed BTE part (2) enclosing a number of electronic parts by moulding the housing of the BTE part (2) around the components.

13. A method according to claim 12 wherein the housing is directly moulded around components of the BTE part (2) allowing the mould to touch the enclosed components.

14. A method according to claim 12 or 13 providing that the housing is moulded around an intermediate shell or skeleton used as a carrier for the mould.

15. A method according to any one of claims 12-14 allowing pressure equalization, if the pressure difference between the interior and exterior of the housing exceeds a predefined threshold level or exceeds a predefined factor.

## Patentansprüche

1. Hörvorrichtung, die ein Mikrophon (8) und einen Empfänger (7) aufweist, wobei die Hörvorrichtung einen ITE Teil (1), der ausgebildet ist, um in einen Gehörgang eines Benutzers fixiert zu werden, und einen BTE Teil (2) aufweist, der ausgebildet ist, um hinter einem Ohr des Benutzers fixiert zu werden, die ITE und BTE Teile wenigstens mechanisch durch ein Verbindungselement (3) verbunden sind, die Hörvorrichtung eine wiederaufladbare Energiequelle (4) und elektrische Ladungsanschlüsse zum Ermöglichen des Aufladens der wiederaufladbaren Energiequelle, wenn diese elektrisch mit Ladeanschlüssen einer Ladungsstation (6) verbunden ist, aufweist, und wobei der ITE Teil (1) das Mikrophon (8) und den Empfänger (7) aufweist, der BTE Teil (2) eine Signalverarbeitungseinheit (22) und mögliche andere Funktionalität aufweist, welche keine Öffnungen im Gehäuse benötigen, **DADURCH GEKENNZEICHNET, DASS** der BTE Teil (2) ein hermetisch verschlossenes äußeres Gehäuse (21) aufweist und wobei sich die elektrischen Ladungsanschlüsse der Hörvorrichtung in oder auf dem ITE Teil oder dem Verbindungselement befinden und wobei der BTE Teil (2) und/oder der ITE Teil (1) Schaltkreise aufweisen, die ausgebildet sind, eine Verwendung eines oder mehrerer der elektrischen Leiter für verschiedene Zwecke je nach dem Operationsmodus zu ermöglichen.

2. Hörvorrichtung nach Anspruch 1, wobei die wiederaufladbare Energiequelle eine wiederaufladbare Batterie aufweist.

3. Hörvorrichtung nach Anspruch 2, wobei sich die wiederaufladbare Batterie (4) im ITE Teil (1) oder im Verbindungselement (3) befindet.

4. Hörvorrichtung nach Anspruch 3, die ausgebildet ist sicherzustellen, dass elektrischer Kontakt zwischen den elektrischen Ladungsanschlüssen der Hörvorrichtung und Ladungsanschlüssen der Ladungsstation (6) über ein Kabel mit einem elektrischen Stecker (5) gebildet wird, der mit einem elektrischen Stecker (23) des BTE Teils (2) übereinstimmt.

5. Hörvorrichtung nach Anspruch 2, wobei sich die wiederaufladbare Batterie (4) im BTE Teil (2) befindet.

6. Hörvorrichtung nach einem der Ansprüche 1 bis 4, wobei sich elektrische Ladungsanschlüsse auf dem Gehäuse des ITE Teils (1) befinden.

7. Hörvorrichtung nach einem der Ansprüche 1 bis 6, wobei das Verbindungselement (3) sieben oder weniger elektrische Leiter (42, 43) zum Bilden elektrischer Verbindungen zwischen dem BTE Teil (2) und dem ITE Teil (1) aufweist, zum Beispiel weniger als 6 oder weniger als 5 oder weniger als 4 Verbindungen.

8. Hörvorrichtung nach einem der Ansprüche 1 bis 7, welche ein Hörgerät, ein Headset, einen Kopfhörer, ein Aktiv-Gehörschutzgerät oder eine Kombination von diesen aufweist.

9. Hörvorrichtung nach einem der Ansprüche 1 bis 8, wobei der ITE Teil (1) und/oder das Verbindungselement (3) ausgebildet ist/sind Einwegteil(e) zu sein, das/die regelmäßig durch entsprechende neue Teile ausgetauscht wird/werden.

10. Hörvorrichtung nach einem der Ansprüche 1 bis 9, wobei der ITE Teil (1) oder das Verbindungselement (3) Schaltkreise zum Bewerkstelligen der Aufladung von der wiederaufladbaren Energiequelle aufweisen.

11. Verwendung einer Hörvorrichtung nach einem der Ansprüche 1 bis 10.

12. Verfahren zur Herstellung einer Hörvorrichtung nach einem der Ansprüche 1 bis 10, wobei das Verfahren umfasst
Vorsehen eines hermetisch verschlossenen eine Zahl von elektronischen Teilen einschließenden BTE Teils (2) durch Formen des Gehäuses des BTE Teils (2) um die Komponenten.

13. Verfahren nach Anspruch 12, wobei das Gehäuse direkt um die Komponenten des BTE Teils (2) geformt wird, wobei die Form die eingeschlossenen Komponenten berühren kann.

14. Verfahren nach einem der Ansprüche 12 oder 13, das vorsieht, dass das Gehäuse um eine dazwischenliegende Schale oder ein dazwischenliegendes Skelett, das als Träger für die Form dient, geformt wird.

15. Verfahren nach einem der Ansprüche 12 bis 14, das Druckausgleich erlaubt, wenn der Druckunterschied zwischen dem Inneren und dem Äußeren des Gehäuses einen vordefinierten Grenzwert übersteigt, z. B. 1 atm, oder einen vordefinierten Faktor übersteigt, z. B. einen Faktor von 2 oder 3.

## Revendications

1. Dispositif d'écoute comprenant une partie intra-auriculaire (1) conçue pour être située dans un canal auditif d'un utilisateur et une partie de contour d'oreille (2) conçue pour être située derrière une oreille de l'utilisateur, les parties intra-auriculaires et de contour d'oreille étant connectées au moins mécaniquement par un élément de connexion (3), l'élément de connexion (3) comprenant des conducteurs électriques pour établir des connexions électriques entre la partie de contour d'oreille (2) et la partie intra-auriculaire (1), le dispositif d'écoute comprenant une source d'énergie rechargeable (4) et des bornes de charge électrique pour permettre la charge de la source d'énergie rechargeable lorsque connectée électriquement aux bornes de charge d'un poste de chargement (6),
dans lequel la partie intra-auriculaire (1) comprend un microphone (8) et un récepteur (7), la partie de contour d'oreille (2) comprend une unité de traitement de signal (22) et d'autres fonctionnalités éventuelles, qui ne nécessitent pas d'ouvertures dans le boîtier, **CARACTÉRISÉ EN CE QUE** la partie de contour d'oreille (2) comprend un boîtier (21) extérieur fermé hermétiquement, et dans lequel les bornes de charge électrique du dispositif d'écoute sont situées dans ou sur la partie intra-auriculaire ou l'élément de connexion, et dans lequel la partie de contour d'oreille (2) et / ou la partie intra-auriculaire (1) comprend un circuit conçu pour permettre une utilisation d'au moins un des conducteurs électriques pour plusieurs fonctions, selon le mode de fonctionnement.

2. Dispositif d'écoute selon la revendication 1, dans lequel la source d'énergie rechargeable comprend une batterie rechargeable.

3. Dispositif d'écoute selon la revendication 2, dans lequel la batterie rechargeable (4) est située dans la partie intra-auriculaire (1) ou dans l'élément de connexion (3).

4. Dispositif d'écoute selon la revendication 3, conçu pour assurer que le contact électrique entre les bornes de charge électrique du dispositif d'écoute et les bornes de charge du poste de chargement (6) est établi par l'intermédiaire d'un câble avec un connecteur électrique (5) correspondant à un connecteur électrique (23) de la partie de contour d'oreille (2).

5. Dispositif d'écoute selon la revendication 2, dans lequel la batterie rechargeable (4) est située dans la partie de contour d'oreille (2).

6. Dispositif d'écoute selon l'une quelconque des revendications 1 à 4, dans lequel les bornes de charge électrique sont situées sur le boîtier de la partie intra-auriculaire (1).

7. Dispositif d'écoute selon l'une quelconque des revendications 1 à 6, dans lequel l'élément de connexion (3) comprend sept conducteurs électriques (42, 43) ou moins pour établir des connexions électriques entre la partie de contour d'oreille (2) et la partie intra-auriculaire (1).

8. Dispositif d'écoute selon l'une quelconque des revendications 1 à 7, comprenant un appareil auditif, un micro-casque, un casque, un dispositif actif de protection de l'oreille ou une combinaison de ceux-ci.

9. Dispositif d'écoute selon l'une quelconque des revendications 1 à 8, dans lequel la partie intra-auriculaire (1) et / ou l'élément de connexion (3) est / sont conçu(s) pour être des pièces jetables qui est / sont échangée(s) régulièrement avec de nouvelles pièces correspondantes.

10. Dispositif d'écoute selon l'une quelconque des revendications 1 à 9, dans lequel la partie intra-auriculaire (1) ou l'élément de connexion (3) comprend un circuit pour la gestion de la charge de la source d'énergie rechargeable.

11. Utilisation d'un dispositif d'écoute selon l'une quelconque des revendications 1 à 10.

12. Procédé de fabrication d'un dispositif d'écoute selon l'une quelconque des revendications 1 à 10, le procédé comprenant la fourniture d'une partie de contour d'oreille (2) fermée hermétiquement enfermant un certain nombre de pièces électroniques par moulage du boîtier de la partie de contour d'oreille (2) autour des composants.

13. Procédé selon la revendication 12, dans lequel le boîtier est moulé directement autour des composants de la partie de contour d'oreille (2) permettant au moule de toucher les composants ci-joints.

14. Procédé selon la revendication 12 ou 13, assurant que le boîtier est moulé autour d'une coque intermédiaire ou un squelette utilisé comme support pour le moule.

15. Procédé selon l'une quelconque des revendications 12 à 14 permettant l'égalisation des pressions, si la différence de pression entre l'intérieur et l'extérieur du boîtier dépasse un niveau de seuil prédéfini, ou dépasse un facteur prédéfini.
